# EUROPÄISCHE PATENTANMELDUNG

(11) **EP 1 056 147 A2**
(43) Veröffentlichungstag der Anmeldung: **29.11.2000**
(21) Anmeldenummer: 00104752.1
(22) Anmeldetag: 04.03.2000
(51) Int. Cl.: H01M 8/04, B60L 11/18

(54) **Brennstoffzellensystem und Verfahren zur elektrischen Versorgung in einem Fahrzeug mit einem solchen System**

(30) Priorität: 22.05.1999 DE 19923738
(71) Anmelder: DaimlerChrysler AG, 70567 Stuttgart (DE)
(72) Erfinder: Konrad, Gerhard, Dr., 89081 Ulm (DE); Zieger, Josef, Dr., 73734 Esslingen (DE); Lamm, Arnold, Dr., 89275 Oberelchingen (DE); von Schwerin, Wolfgang, 71397 Leutenbach (DE); Noreikat, Karl-Ernst, 73733 Esslingen (DE)

(57) **Zusammenfassung**

Die Erfindung betrifft ein Brennstoffzellensystem zur Versorgung elektrischer Verbraucher mit elektrischer Energie in einem Fahrzeug sowie ein entsprechendes Verfahren, wobei zur Erhöhung des Wirkungsgrades der Stromerzeugung das Brennstoffzellensystem mit Luftsauerstoff aus dem Druckluftbremssystem versorgt wird. Zusätzlich können ein Druckluftzwischenspeicher oder ein Kompressor für Umgebungsluft vorgesehen sein, um das Brennstoffzellensystem mit Luftsauerstoff zu versorgen.

## Beschreibung

Die Erfindung betrifft ein Brennstoffzellensystem zur Versorgung elektrischer Verbraucher mit elektrischer Energie in einem verbrennungsmotorisch oder mittels Brennstoffzellen angetriebenen Fahrzeug sowie ein Verfahren zur elektrischen Versorgung mittels eines solchen Brennstoffzellensystem in einem Fahrzeug gemäß den Oberbegriffen der Patentansprüche 1 bzw. 7.

Brennstoffzellensysteme zur Versorgung elektrischer Verbraucher eines Fahrzeugs mit verbrennungsmotorischem Antrieb sind aus der DE 195 23 109 A1 und der DE 197 03 171 A1 bekannt. Dort wird die zur Stromversorgung elektrischer Verbraucher dienende, von der Brennkraftmaschine angetriebene Lichtmaschine durch ein Brennstoffzellensystem ersetzt. Brennstoffzellen wandeln die bei der Oxidation eines Brennstoffs freiwerdende chemische Energie in elektrische Energie um, wobei als Brennstoff beispielsweise Wasserstoff, Kohlenwasserstoffe oder Methanol und als Oxidationsmittel meist Luft oder reiner Sauerstoff verwendet werden. Bei den Brennstoffzellensystemen der genannten Dokumente wird Wasserstoff aus dem zum Betrieb des Verbrennungsmotors notwendigen flüssigen Kraftstoff als Brennstoff für das Brennstoffzellensystem mittels Abspaltung oder Reformierung gewonnen. Die verbleibenden Kraftstoffbestandteile werden zum Antrieb der Brennkraftmaschine weiterverwendet. Der derart gewonnene Wasserstoff wird als Brennstoff der Anodenseite des Brennstoffzellensystems zugeführt. Üblicherweise wird Luftsauerstoff als Oxidationsmittel verwendet, der aus der Umgebungsluft über einen Verdichter angesaugt und der Kathodenseite des Brennstoffzellensystems zugeführt wird.

Der für die Zufuhr des Luftsauerstoffs zur Brennstoffzelle verwendete Kompressor muß seinerseits elektrisch oder mechanisch angetrieben werden, wodurch elektrische oder mechanische Energie zusätzlich verbraucht wird, was den Wirkungsgrad der Stromerzeugung senkt. Desweiteren stellt ein solcher Kompressor ein zusätzliches und störanfälliges Bauteil im Fahrzeug dar.

Aufgabe vorliegender Erfindung ist, ein Brennstoffzellensystem der eingangs genannten Art zu schaffen, das einen höheren Wirkungsgrad der Stromerzeugung unter gleichzeitiger Einsparung von Komponenten ereicht. Dieses System soll weiterhin durch ein entsprechendes Verfahren möglichst effektiv betrieben werden.

Diese Aufgabe wird erfindungsgemäß durch die Merkmale der unabhängigen Patentansprüche 1 und 7 gelöst.

Das erfindungsgemäße Brennstoffzellensystem zeichnet sich dadurch aus, daß dieses über eine Versorgungsleitung mit dem Druckluftsystem des Fahrzeugs verbunden ist, welches unter anderem zur Versorgung der Druckluftbremsanlage dient, um von dort den erforderlichen Luftsauerstoff zum Brennstoffzellensystem zu leiten. Insbesondere wird bei einem verbrennungsmototisch angetriebenen Fahrzeug, bei dem die Brennkraftmaschine den Luftpresser des Druckluftsystems antreibt das die elektische Energie liefernde Brennstoffzellensystem über eine Versorgungsleitung zur Zufuhr des notwendigen Luftsauerstoffs mit diesem Luftpresser verbunden.

Üblicherwiese arbeitet das Druckluftsystem des Fahrzeugs bei ca. 8 bis 12 bar. Der zur Versorgung dieses Druckluftsystems dienende Luftpresser wird bei Fahrzeugen mit Verbrennungsmotor direkt oder über ein Riemensystem von der Brennkraftmaschine angetrieben. Die geförderte Luftmenge ist dabei abhängig von der Drehzahl des Motors. Um auch bei niedrigen Drehzahlen ausreichend Luft für das Bremssystem zur Vefügung zu stellen, muß der Luftpresser entsprechend dimensioniert werden und außerdem müssen Zwischenspeicher für die Druckluft vorgesehen werden (z.B. bei Motorstillstand). Vergleichbare Zustände liegen bei mit Brennstoffzellen angetriebenen Fahrzeugen vor. Dies hat andererseits zur Folge, daß der Luftpresser bei hoher Drehzahl sowie bei langen Fahrstrecken mit wenigen Bremsvorgängen große Luftmengen fördert und verdichtet, deren überwiegender Teil als Überschußluft ungenutzt in das Abgassystem des Fahrzeugs ausgeblasen wird.

Die Erfindung erlaubt nunmehr, die vom Druckluftbremssystem geförderte und verdichtete Luft effektiv zur Stromerzeugung durch ein Brennstoffzellensystem zu nutzen, wodurch der Wirkungsgrad der Stromerzeugung erhöht wird und der bisher eigens benötigte Kompressor für Umgebungsluft für die Brennstoffzellen entfallen kann.

Die Erfindung ist hierbei nicht auf Wasserstoff-Brennstoffzellen mit eigenem Wasserstofftank beschränkt, sondern für beliebige Brennstoffzellensysteme geeignet, die in Fahrzeugen zur Stromerzeugung eingesetzt werden, wie z. B. solche, die den benötigten Wasserstoff durch Abspalten oder Reformierung eines Kohlenwasserstoffs oder Alkohols erzeugen oder die über einen flüssigen Anodenkreislauf verfügen, wie Direktmethanolbrennstoffzellen (DMFC).

Weiterhin ist die Erfindung sowohl für Fahrzeuge mit Verbrennungsmotor als auch mit Elektroantrieb einsetzbar, solange das Fahrzeug über ein Druckluftsystem verfügt.

Es kann vorteilhaft sein, ein Teil der vom Druckluftsystem erzeugten Druckluft zwischenzuspeichern und den Zwischenspeicher mit der Versorgungsleitung des Brennstoffzellensystem für Luftsauerstoff zu verbinden. Auf diese Weise kann ein kurzzeitiger erhöhter elektrischer Energiebedarf abgedeckt werden, soweit die hierfür entsprechend benötigte Menge an Brennstoff für das Brennstoffzellensystem verfügbar ist. Es ist sinnvoll, den ohnehin vorhandenen Zwischenspeicher des Druckluftsystems auch als Zwischenspeicher für die dem Brennstoffzellensystem zuzuführende Druckluft zu verwenden.

Es kann weiterhin vorteilhaft sein, einen Kompressor für Umgebungsluft vorzusehen, der an die Versorgungsleitung für den Luftsauerstoff des Brennstoffzellensystems zuschaltbar ist, und der von diesem System angetrieben wird. Hierdurch kann unabhängig von der Brennkraftmaschine bei einem Motorstillstand oder bei Luftmangel im Bremssystem die Luftversorgung der Brennstoffzellen aufrechterhalten werden. Die zum Ingangsetzen der Brennstoffzellen notwendige Luft kann hierbei aus einem Druckluftspeicher entnommen werden. Der hier vorgesehene Kompressor kann kleiner dimensioniert werden als der bisher notwendige Kompressor, der alleine zur Luftzufuhr in das Brennstoffzellensystem zuständig war.

Schließlich ist es auch möglich, den Luftpresser des Druckluftsystems als den gerade genannten Kompressor einzusetzen, der dann vom Brennstoffzellensystem elektrisch angetrieben wird und gleichzeitig diesem den notwendigen Luftsauerstoff zuführt.

Vor dem anodenseitigen Einleiten von Druckluft in die Brennstoffzellen muß eine Druckanpassung beispielsweise durch vorgeschaltete Druckminderer stattfinden. Die Verwendung von zwischengespeicherter Druckluft bietet sich bei niedrigen Motordrehzahlen, bei Motorstillstand oder im Falle von Luftmangel im Druckluftsystem an. Die zusätzliche Versorgung des Brennstoffzellensystem mit Luft aus einem eigenen Kompressor ist insbesondere vorteilhaft bei hohem Energiebedarf, z.B. durch Zuschalten einer Klimaanlage. Außerdem kann hierdurch auch der Luftbedarf der Brennstoffzellen bei stehenden Fahrzeug mit angeschalteten elektrischen Verbrauchern gedeckt werden.

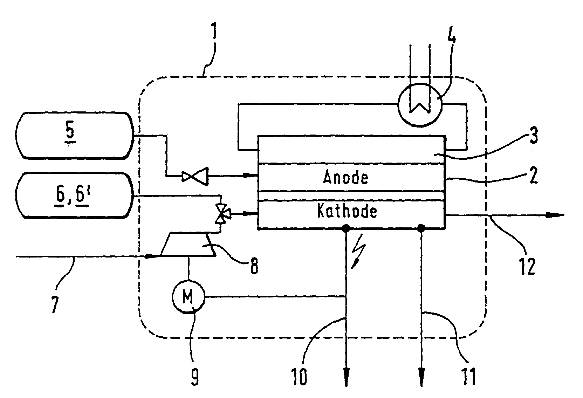

Im folgenden soll die Erfindung anhand eines durch die beigefügte Figur illustrierten Ausführungsbeispieles näher erläutert werden.

Die Figur zeigt ein erfindungsgemäßes Brennstoffzellensystem zur elektrischen Versorgung in einem Fahrzeug mit verbrennungsmotorischem oder Brennstoffzellen-Antrieb.

In der Figur ist das erfindungsgemäße Brennstoffzellensystem mit der Bezugszahl 1 bezeichnet. Dieses weist eine Anordnung 2 von Brennstoffzellen auf, die in bekannter Weise aus einer Anode sowie einer Kathode besteht, die in einem Elektrolyt untergebracht sind. Der in der Brennstoffzellenanordnung 2 verbrauchte Brennstoff wird anodenseitig zugeführt. Der für die Oxidation des Brennstoffs notwendige Sauerstoff wird kathodenseitig in die Brennstoffzellenanordnung 2 eingeleitet. Die Brennstoffzellenanordnung 2 wird mittels einer Kühleinrichtung 3 gekühlt, die abgeleitete Wärme wird dabei einem Wärmetauscher 4 zugeführt.

Im vorliegenden Ausführungsbeispiel wird als Brennstoff für die Brennstoffzellenanordnung 2 Wasserstoff verwendet, der einem Wasserstofftank 5 entnommen wird. Nach entsprechender Druckminderung auf den Betriebsdruck der Brennstoffzelle wird der Wasserstoff gasförmig der Anodenseite der Brennstoffzellenanordnung 2 zugeführt. Anstelle des hier verwendeten Wasserstofftanks 5 ist selbstverständlich eine Brennstoffversorgung denkbar, durch die Wasserstoff aus dem vorhandenen Kraftstoff für die Brennkraftmaschine des Fahrzeugs abgespalten wird oder durch Reformierung des Kraftstoffs erzeugt wird oder bei der ein flüssiger Anodenkreislauf verwendet wird (DMFC).

Erfindungsgemäß wird der zur Oxidation notwendige Sauerstoff aus der Druckluft des schematisch dargestellten Druckluftsystems 6 entnommen. Der in der Luft enthaltene Sauerstoff oxidiert den zugeführten Wasserstoff oder einen anderen Energieträger in der Elektrolytlösung der Brennstoffzellenanordnung 2. Die freiwerdende chemische Energie wird in einen Elektronenfluß, d. h. in elektrische Energie umgewandelt. Als Reaktionsprodukt entsteht hierbei lediglich Wasser, das durch eine Ableitung 11 abgeleitet wird. Unverbrauchte Restluft tritt durch die Ableitung 12 aus. Die erzeugte elektrische Energie wird durch die Leitung 10 den elektrischen Verbrauchern im Fahrzeug zur Verfügung gestellt.

Erfindungsgemäß wird bei laufendem Fahrzeug aus dem im Fahrzeug vorhandenen Druckluftsystem dort erzeugte Druckluft nach entsprechender Druckminderung für die Luftzufuhr des Brennstoffzellensystems 1 verwendet. Druckluftsysteme in Nutzfahrzeugen arbeiten üblicherweise mit Druckluft von 8 bis 12 bar. Bei verbrennungsmotorischem Antrieb wird das Druckluftbremssystem mittels eines Luftpressers versorgt, der von der Brennkraftmaschine direkt oder über ein Riemensystem angetrieben wird. Der Luftpresser und daran angeschaltete Zwischenspeicher für Druckluft müssen derart dimensioniert werden, daß auch bei niedrigen Drehzahlen mit häufigen Bremsvorgängen ausreichend Luft für das Bremssystem zur Verfügung steht. Umgekehrt hat dies zur Folge, daß bei Fahrten mit hoher Drehzahl oder bei beispielsweise Überlandfahrten mit wenigen Bremsvorgängen große Mengen überschüssiger Druckluft erzeugt werden, die ungenutzt das Fahrzeug über das Abgassystem verlassen. Durch vorliegende Erfindung kann ein Teil dieser Druckluft dazu verwendet werden, das Brennstoffzellensystem 1 mit dem notwendigen Luftsauerstoff zu versorgen, um die benötigte elektrische Energie bereitzustellen.

Bei stehendem Fahrzeug oder bei niedrigen Motordrehzahlen kann die benötigte Druckluft für das Brennstoffzellensystem 1 aus einem Druckluftzwischenspeicher entnommen werden, wenn das Druckluftsystem 6 nicht mehr genügend Luft liefert. In diesem Fall würde anstelle des in der Figur dargestellten Druckluftsystems 6 ein Druckluftzwischenspeicher 6' treten. Die Umschaltung der Luftversorgung vom Druckluftsystem auf einen Zwischenspeicher wird von einem geeigneten Steuersystem abhängig von der Drehzahl sowie dem Luftdruck des Luftpressers vorgenommen.

Schließlich kann, wie in der Figur dargestellt, eine weitere Umschaltung auf einen Kompressor 8 erfolgen, der über eine Versorgungsleitung 7 Umgebungsluft ansaugt, diese komprimiert und in die Luftversorgungsleitung für die Brennstoffzellenanordnung 2 einspeist. Der Motor 9 des Kompressors 8 wird hierbei elektrisch von der Brennstoffzellenanordnung 2 angetrieben. In diesem Fall würde das Brennstoffzellensystem 1 die zur Luftversorgung notwendige Energie ganz oder zum Teil selbst erzeugen. Hierdurch ist eine Unabhängigkeit der elektrischen Stromerzeugung vom Fahrzeugantrieb gewährleistet. Beispielsweise könnte nach längerem Motorstillstand die elektrische Stromerzeugung durch das Brennstoffzellensystem 1 zunächst über die Zuleitung von Wasserstoff aus dem Wasserstofftank 5 und von Druckluft aus dem Druckluftzwischenspeicher 6 in Gang gesetzt werden, bis genügend Energie erzeugt wird, um über den Kompressor 8 die notwendige Luftmenge aus der Umgebungsluft anzusaugen.

Die Erfindung nutzt in effektiver Weise die in einem Fahrzeug vorhandene Druckluft des Druckluftsystems und erhöht dadurch den Wirkungsgrad der elektrischen Stromerzeugung durch ein Brennstoffzellensystem. Je nach Betriebszustand des Fahrzeugs sind die oben beschriebenen Zuschaltungen weiterer Luftquellen oder Umschaltungen auf vorhandene Druckluftspeicher möglich. Die Erfindung läßt sich universal in bereits vorhandene Brennstoffzellensysteme von Fahrzeugen integrieren.

## Patentansprüche

1. Brennstoffzellensystem zur Versorgung elektrischer Verbraucher in einem verbrennungsmotorisch oder mit Brennstoffzellen angetriebenen Fahrzeug,
**dadurch gekennzeichnet,**
daß das Brennstoffzellersystem (1) über eine Versorgungsleitung mit dem Druckluftsystem (6) des Fahrzeugs verbunden ist, um dem Brennstoffzellensystem (1) Luftsauerstoff zuzuführen.

2. Brennstoffzellensystem nach Anspruch 1 für ein verbrennungsmotorisch angetriebenes Fahrzeug, dadurch gekennzeichnet, daß das Brennstoffzellensystem (1) über eine Versorgungsleitung mit dem von dem Verbrennungsmotor angetriebenen Luftpresser des Druckluftsystems (6) verbunden ist.

3. Brennstoffzellensystem nach Anspruch 1 oder 2, dadurch gekennzeichnet, daß ein Zwischenspeicher (6') für Druckluft vorgesehen ist, der an die Versorgungsleitung für den dem Brennstoffzellensystem (1) zuzuführenden Luftsauerstoff zuschaltbar ist.

4. Brennstoffzellensystem nach einem der Ansprüche 1 bis 3, dadurch gekennzeichnet, daß ein Kompressor (8) für Umgebungsluft vorgesehen ist, der an die Versorgungsleitung für den dem Brennstoffzellensystem (1) zuzuführenden Luftsauerstoff zuschaltbar ist, und der von dem Brennstoffzellensystem (1) elektrisch angetrieben wird.

5. Brennstoffzellensystem nach Anspruch 4, dadurch gekennzeichnet, daß der Kompressor (8) auch der Luftpresser des Druckluftsystems (6) ist.

6. Fahrzeug mit einem Brennstoffzellensystem (1) nach einem der Ansprüche 1 bis 5.

7. Verfahren zur Versorgung elektrischer Verbraucher mit elektrischer Energie in einem verbrennungsmotorisch oder mittels Brennstoffzellen angetriebenen Fahrzeug unter Verwendung eines Brennstoffzellensystems (1), dem anodenseitig ein Brennstoff und kathodenseitig ein Oxidationsmittel wie Luftsauerstoff zugeführt wird, dadurch gekennzeichnet, daß zur Versorgung des Brennstoffzellensystems (1) mit Luftsauerstoff Luft aus dem Druckluftsystem (6) des Fahrzeugs zum Brennstoffzellensystem (1) geleitet wird.

8. Verfahren nach Anspruch 7, dadurch gekennzeichnet, daß der Druck der zum Brennstoffzellensystem (1) geleiteten Luft vor Einleiten in das Brennstoffzellensystem (1) gemindert wird.

9. Verfahren nach Anspruch 7 oder 8, dadurch gekennzeichnet, daß ein Teil der Luft zwischengespeichert wird.

10. Verfahren nach Anspruch 9, dadurch gekennzeichnet, daß bei niedrigen Motordrehzahlen, bei Motorstillstand oder im Falle von Luftmangel im Druckluftsystem (6) zwischengespeicherte Luft zur Versorgung des Brennstoffzellensystems (1) verwendet wird.

11. Verfahren nach einem der Ansprüche 7 bis 10, dadurch gekennzeichnet, daß ein Kompressor (8) für Umgebungsluft von dem Brennstoffzellensystem (1) elektrisch angetrieben wird, wobei Kompressorluft zur Versorgung des Brennstoffzellensystems (1) verwendet wird.

12. Verfahren nach Anspruch 11, dadurch gekennzeichnet, daß bei niedrigen Mortordrehzahlen, bei Motorstillstand oder im Falle von Luftmangel im Druckluftsystem Luft aus dem Kompressor (8) für Umgebungsluft dem Brennstoffzellensystem (1) zugeführt wird.
